Europäisches Patentamt

European Patent Office

Office européen des brevets

(11) Publication number: **0 281 342**
**A1**

# EUROPEAN PATENT APPLICATION

(21) Application number: 88301725.3

(51) Int. Cl.⁴: **A47J 36/28**

(22) Date of filing: 29.02.88

(30) Priority: 28.02.87 GB 8704758
14.03.87 GB 8706096

(43) Date of publication of application:
07.09.88 Bulletin 88/36

(84) Designated Contracting States:
AT BE CH DE ES FR GB GR IT LI LU NL SE

(71) Applicant: **Celestic Limited**
**Norfolk Lane**
**Cleethorpes South Humberside DN35**
**8BB(GB)**

(72) Inventor: **Stephenson, Maurice**
**Elm House Farm, Crosby**
**Maryport, Cumbria(GB)**

(74) Representative: **Pattullo, Norman et al**
**Murgitroyd and Company Mitchell House 333**
**Bath Street**
**Glasgow G2 4ER(GB)**

(54) Self heating food container.

(57) A self heating food container comprises an inner can 1 located inside an outer can 3. The space between the inner can 1 and the outer can 3 defines an annular chamber 4. This chamber 4 is filled with a quantity of quicklime 6 and plastics coated aluminium foil pouch 8. This pouch 8 contains a quantity of water.

## Self Heating Food Container

This invention relates to a self heating food container.

Self heating food containers have been produced by placing a can containing food inside another can. The space between the two cans then has a quantity of quicklime granules and a water pouch inserted. The can is activated by pulling a ring pull which works a spike or similar device which punctures the water pouch. Heat given off by the resultant reaction between the quicklime and water then heats the food. Alternatively a separate spike can be provided for puncturing the water pouch.

The water pouch is generally formed from a plastics material and this places a limitation on the shelf life of the product as the plastics material has a water vapour transmission rate which allows the hydroscopic quicklime to absorb moisture over a period of time thus reducing its reactivity. This problem can be overcome to some extent by the introduction of a wax sealant to protect the quicklime. This however necessitates extra steps in the manufacturing process and leads to increased costs.

According to the present invention there is provided a self heating food container comprising a first container for food to be heated located within a second container which forms a chamber around said first container, said chamber having a first portion for receiving quicklime and a second portion for receiving water and wherein said first and second portions are separated by a liquid impermeable metallic material membrane.

Preferably said membrane is formed by an aluminium pouch.

Preferably also said membrane is plastics coated on one or both sides.

Preferably also said aluminium pouch is affixed to the walls of the first and second containers.

Preferably also quicklime and water are provided in the first and second portions respectively in a ratio of 1 part quicklime to an amount of water in the range 0.55 to 0.7 parts by weight.

Most preferably the quicklime and water are provided in the first and second portions respectively in a ratio of 1 part quicklime to 0.63 parts of water by weight.

Preferably also the quicklime is of reduced reactivity.

Preferably also the quicklime is provided in granular form, the diameter of the granules being in the range 1mm to 7mm.

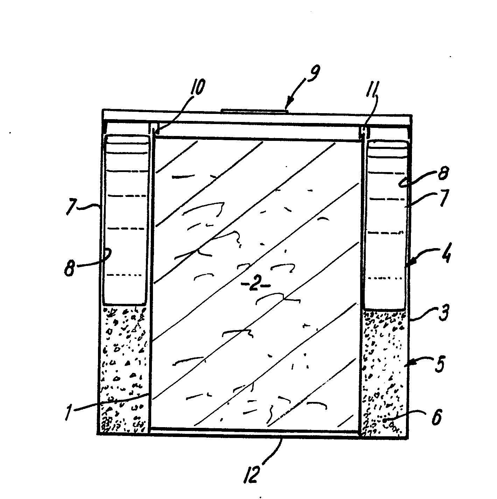

Embodiments of the present invention will now be described, by way of example, with reference to the accompanying drawing, which is a sectional side view of a self heating food container in accordance with the present invention.

Referring to the drawing a self heating food container comprises an inner can 1, containing food 2 to be heated, located inside an outer can 3. The space between the inner can 1 and the outer can 3 defines an annular chamber 4. A first portion 5 of this chamber 4 is filled with a quantity of grains of quicklime 6. The quicklime is a mixture of hard burnt lime and soft burnt lime. The quicklime is also in granular form with the diameter of the granules being the range 1m to 7mm diameter. A second portion 7 of the chamber 4 contains a plastics coated aluminium foil pouch 8. This pouch 8 contains a quantity of water. The quantity of water comprises an amount in the range of 0.55 parts to 0.7 parts by weight to 1 part quicklime. It has been found that a ratio of 0.63 parts water to 1 part quicklime is most effective. The aluminium which forms the pouch is formed from a 9 or 12 micron thick foil coated on both sides with a plastics material. On one side the plastics material used is melanex of 12 micron thickness and on the other side the plastics material used is a polyethylene material again 12 microns thick.

A ring pull top 9 is provided for the outer can 3 and a plastics insert seal 10 provides a complete hermetic seal for the container. A layer of polystyrene material (not shown) provides insulation for the can 3 and a second layer of polystyrene forms a printed label.

The container is assembled upside down. The seal 10 is placed against the top of the outer can 3. The inner can 1 is then inserted and engages a groove 11 which serves to centralise the inner can within the outer can 3. The pouch 8 is then inserted followed by a quantity of quicklime 6. A base 12 is then fitted to the outer can 3. If desired the procedure can be varied slightly by inserting the pouch 8 before the can 1.

In use, the top 9 is removed and the aluminium pouch 8 is punctured by inserting a metal or plastics spike through each of three pre formed throughholes in the seal 10 in turn.

This initiates a reaction between the water and the quicklime which serves to heat the food 2 in the inner can 1 in a short period of time.

The limited amount of water in relation to the quicklime avoids problems which can occur with excess water when the reaction may be too quick causing emission of water vapour and lime particles.

The aluminium foil pouch 8 provides a waterproof barrier between the water and the quicklime thus overcoming previous problems whereby the reactivity of the quicklime reduces in time due to a gradual absorption of water vapour transferred through the material of the barrier. The shelf life of the container is thus increased.

Modifications and improvements may be incorporated without departing from the scope of the invention.

For example the ring pull top 9 can be replaced by a simple foil seal. A ready perforated metal ring may be used around the top of the can with the plastics insert seal providing a sealing device for the container. It is also envisaged that the outer can 3 can be formed from alternative material such as an aluminium or card composite or a plastics or plastics coated card material.

## Claims

1. A self heating food container comprising a first container for food to be heated located within a second container which forms a chamber around said first container, said chamber having a first portion for receiving quicklime and a second portion for receiving water, wherein said first and second portions are separated by a liquid impermeable metallic material membrane.

2. A self heating food container as claimed in Claim 1, wherein the metallic material membrane is an aluminium pouch.

3. A self heating food container as claimed in Claims 1 or 2, wherein the metallic material membrane is plastics coated on one or both sides.

4. A self heated food container as claimed in any one of the preceding Claims, wherein the metallic material membrane is affixed to the walls of the first and second containers.

5. A self heating food container as claimed in any one of the preceding Claims, wherein quicklime and water are provided in the first and second portions respectively in a ratio of 1 part quicklime to an amount of water in the range 0.55 to 0.7 parts by weight.

6. A self heating food container as claimed in any one of Claims 1 to 4, wherein quicklime and water are provided in the first and second portions respectively in a ratio of 1 part quicklime to 0.63 parts of water by weight.

7. A self heating food container as claimed in any one of the preceding Claims, wherein at least some of the quicklime is of reduced reactivity.

8. A self heating food container as claimed in any one of the preceding Claims, wherein the quicklime is provided in granular form, the diameter of the granules being in the range 1mm to 7mm.

9. A method of assembling a self heating food container comprising inverting an outer container, placing a seal against the top of the outer container, inserting an inner food container into the outer container to engage a groove in the seal which serves to centralise the inner container within the outer container, inserting a water pouch followed by a quantity of quicklime into the annular space defined by the inner and outer containers and fitting a base to the outer container.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A- 826 637 (THERMIT)<br>* Page 4, lines 54-62; figures * | 1-2 | A 47 J 36/28 |
| X | FR-A- 969 791 (KOPPENHAGUE)<br>* Whole document * | 1 | |
| A | | 9 | |
| X | US-A-2 300 793 (MARTIN)<br>* Page 2, left-hand column, lines 65-71; figures * | 1 | |
| X | US-A-2 384 720 (BABCOCK et al.)<br>* Page 1, right-hand column, line 13 - page 2, right-hand column, line 13; figures * | 1-2 | |
| A | | 3 | |
| Y | EP-A-0 082 834 (APELLANIZ)<br>* Claims 1,3,7; page 9, lines 19-24; figures * | 1-8 | |
| Y | DE-A-2 042 693 (HOFFMANN)<br>* Page 8, lines 24-30; figures * | 1-8 | TECHNICAL FIELDS SEARCHED (Int. Cl.4)<br><br>A 47 J |
| A | FR-A-2 065 782 (BRUWER S.R.L.)<br>* Page 6, lines 3-10 * | 3 | |
| A | US-A-2 935 983 (REIK)<br>* Whole document * | 2 | |
| X | FR-A- 863 212 (PROKOUDINE-GORSKY)<br>* Page 2, lines 3-9 * | 1,4 | |
| A | WO-A-8 605 671 (TARAHELM)<br>* Claims * | 5-8 | |

-/-

The present search report has been drawn up for all claims

| Place of search | Date of completion of the search | Examiner |
|---|---|---|
| THE HAGUE | 03-06-1988 | GAIC P.M.Z. |

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-2 227 502 (READI TEMP. INC.) <br> * Page 9, line 12 - page 10, line 24; figures 1-2 * <br> --- | 9 | |
| A | US-A-3 675 637 (TRIMBLE) <br> * Column 3, lines 3-17; figures * <br> --- | 9 | |
| A | EP-A-0 180 375 (HOTCAN LTD.) <br> ----- | | |

TECHNICAL FIELDS SEARCHED (Int. Cl.4)

The present search report has been drawn up for all claims

| Place of search | Date of completion of the search | Examiner |
|---|---|---|
| THE HAGUE | 03-06-1988 | GAIC P.M.Z. |